# FASCICULE DE BREVET EUROPEEN

(11) **EP 3 959 096 B1**
(45) Date de publication et mention de la délivrance du brevet: **17.01.2024**
(21) Numéro de dépôt: 20725861.7
(22) Date de dépôt: 10.03.2020
(51) Int. Cl.: B60K 1/04, B60K 11/02, B60K 1/00

(54) **BATTERIE RECHARGEABLE DE VÉHICULE, À BOÎTIER PRÉ-ÉQUIPÉ D'INTERFACES**
FAHRZEUGAKKUMULATOR MIT EINEM MIT SCHNITTSTELLEN VORBESTÜCKTEN GEHÄUSE
RECHARGEABLE VEHICLE BATTERY HAVING A CASE PRE-FITTED WITH INTERFACES

(30) Priorité: 23.04.2019 FR 1904258
(43) Date de publication de la demande: 02.03.2022
(73) Titulaire: Stellantis Auto SAS, 78300 Poissy (FR)
(72) Inventeur: COHEN, Philippe, 91390 MORSANG SUR ORGE (FR); MATHAMEL, Franck, 91380 CHILLY MAZARIN (FR)
(86) Numéro de dépôt international: PCT/FR2020/050480
(87) Numéro de publication internationale: WO 2020/217013

(56) Documents cités:
- EP-A1- 2 985 560
- JP-A- 2011 230 530
- US-A1- 2019 061 831

## Description

La présente invention revendique la priorité de la demande française 1904258 déposée le 23.04.2019.

### Domaine technique de l'invention

L'invention concerne les véhicules à groupe motopropulseur tout électrique ou hybride (thermique/électrique), et plus précisément les batteries rechargeables qui équipent de tels véhicules.

### Etat de la technique

JP 2011 230530 A divulgue un véhicule électrique comprenant une batterie et une unité haute tension.

Un groupe motopropulseur (ou GMP) tout électrique ou hybride (thermique/électrique) comprend au moins une machine motrice électrique qui a besoin d'énergie électrique pour fonctionner. Cette énergie électrique est fournie par une batterie rechargeable via un onduleur généralement situé dans le compartiment moteur du véhicule.

La batterie (rechargeable) est solidarisée à la face supérieure du plancher, éventuellement via une plaque de renfort, et par exemple entre le siège du conducteur et le siège du passager avant ou dans le coffre. La batterie est couplée à l'onduleur par deux câbles d'alimentation (haute tension) qui sont installés sous le plancher du véhicule, et à un boîtier (ou bloc) de jonction électrique (qui assure la liaison électrique et comprend notamment des fusibles) par des câbles électriques qui traversent une ouverture définie dans le plancher. Le couplage entre la batterie et les câbles d'alimentation peut se faire, comme décrit dans le document brevet FR-B1 3006811, via une platine de raccordement électrique qui est fixée par vissage sous le plancher en regard de l'ouverture précitée et qui est aussi couplée au boîtier de jonction.

La fixation de cette platine de raccordement électrique sous le plancher nécessite l'intervention d'un technicien ou d'un robot, ce qui augmente la durée de fabrication du véhicule et donc le coût de ce dernier.

Par ailleurs, la batterie comprend aussi en interne un circuit de refroidissement qui débouche hors d'elle et qui doit être couplé à des conduits d'alimentation externes dans lesquels circule un fluide de refroidissement. Lorsqu'une partie de ces conduits d'alimentation doit être installée sous le plancher, il faut alors de nouveau prévoir une traversée du plancher pour permettre son couplage au circuit de refroidissement via des connecteurs fluidiques. Cette traversée nécessite une autre ouverture que celle précitée (obturée par la platine de raccordement électrique), car cette dernière est dédiée à la connexion électrique, et la fixation sous cette autre ouverture d'une platine de raccordement fluidique nécessite aussi l'intervention d'un technicien ou d'un robot, ce qui augmente la durée de fabrication du véhicule et donc le coût de ce dernier.

D'une manière générale, les solutions actuelles peuvent nuire à l'ergonomie du conducteur par une dégradation de l'habitabilité et/ou de l'accessibilité.

L'invention a donc notamment pour but d'améliorer la situation.

### Présentation de l'invention

Elle propose notamment à cet effet une batterie rechargeable, d'une part, destinée à équiper un plancher d'un véhicule comprenant un groupe motopropulseur, utilisant de l'énergie électrique transportée par des câbles électriques, et des conduits d'alimentation dans lesquels circule un fluide de refroidissement, et, d'autre part, comprenant un boîtier comportant une paroi inférieure et logeant au moins un dispositif de stockage d'énergie électrique et un circuit de refroidissement destiné à être couplé aux conduits d'alimentation.

Cette batterie rechargeable se caractérise par le fait :
- que la paroi inférieure de son boîtier est destinée à être couplée à une face supérieure du plancher au-dessus d'une ouverture définie dans ce dernier, et
- qu'elle comprend, d'une part, une interface de connexion externe, couplée au circuit de refroidissement, solidarisée fixement à la paroi inférieure de son boîtier et destinée à traverser cette ouverture, afin d'être couplée à une partie des conduits d'alimentation passant sous le plancher, et, d'autre part, une interface électrique externe, couplée au dispositif de stockage d'énergie électrique, solidarisée fixement à la paroi inférieure de son boîtier et destinée à traverser cette ouverture, afin d'être couplée à une partie des câbles électriques passant sous le plancher.

Ainsi, on n'a qu'à installer une batterie pré-équipée de ses interface de connexion et interface électrique, et on préserve l'ergonomie du conducteur en dégradant peu ou pas l'habitabilité et/ou l'accessibilité.

La batterie rechargeable selon l'invention peut comporter d'autres caractéristiques qui peuvent être prises séparément ou en combinaison, et notamment :
- son interface électrique peut comprendre deux connecteurs électriques traversant de façon étanche la paroi inférieure du boîtier et destinés à être couplés aux câbles électriques ;
- son interface de connexion peut comprendre deux connecteurs fluidiques solidarisés fixement à la paroi inférieure de son boîtier, traversant de façon étanche cette paroi inférieure, et destinés à être couplés aux conduits d'alimentation ;
- elle peut comprendre une interface de dégazage solidarisée fixement à la paroi inférieure de son boîtier, communiquant avec l'intérieur de son boîtier, et destinée à traverser l'ouverture afin d'évacuer du gaz et/ou du liquide présent(s) à l'intérieur du boîtier.

L'invention propose également un véhicule, éventuellement de type automobile, et comprenant :
- un groupe motopropulseur utilisant de l'énergie électrique transportée par des câbles électriques,
- un plancher comprenant une ouverture,
- des conduits d'alimentation dans lesquels circule un fluide de refroidissement,
- au moins une batterie rechargeable du type de celle présentée ci-avant, couplée à une face supérieure du plancher au-dessus de l'ouverture et couplée aux câbles électriques et conduits d'alimentation via cette ouverture.

Par exemple, ce véhicule peut comprendre une plaque de renfort comprenant une ouverture similaire à l'ouverture de son plancher, solidarisée fixement à la face supérieure de son plancher au-dessus de l'ouverture de ce dernier, et à laquelle est solidarisée fixement la paroi inférieure du boîtier de la batterie rechargeable.

Egalement par exemple, il peut comprendre un joint d'étanchéité intercalé entre la paroi inférieure du boîtier de la batterie rechargeable et la plaque de renfort autour de l'ouverture de cette dernière.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue du dessous, une partie d'un plancher de véhicule, équipée d'un exemple de réalisation d'une batterie rechargeable selon l'invention, et
[Fig. 2] illustre schématiquement, dans une vue en coupe dans un plan longitudinal et vertical (XZ) la partie du plancher de la figure 1.

### Description détaillée de l'invention

L'invention a notamment pour but de proposer une batterie rechargeable BR destinée à équiper un plancher PV d'un véhicule à groupe motopropulseur (ou GMP) tout électrique ou hybride (thermique/électrique), et pré-équipée de ses interfaces.

Dans ce qui suit, on considère, à titre d'exemple non limitatif, que la batterie rechargeable BR est destinée à équiper un véhicule V de type automobile, comme par exemple une voiture. Mais l'invention n'est pas limitée à ce type de véhicule. En effet, une batterie rechargeable BR peut équiper n'importe quel véhicule comprenant un plancher et un GMP tout électrique ou hybride (thermique/électrique). Ainsi, une batterie rechargeable BR peut équiper un véhicule terrestre, maritime (ou fluvial), ou aérien.

Par ailleurs, on considère dans ce qui suit, à titre d'exemple non limitatif, que le GMP du véhicule V est tout électrique. Mais il pourrait être hybride (thermique/électrique).

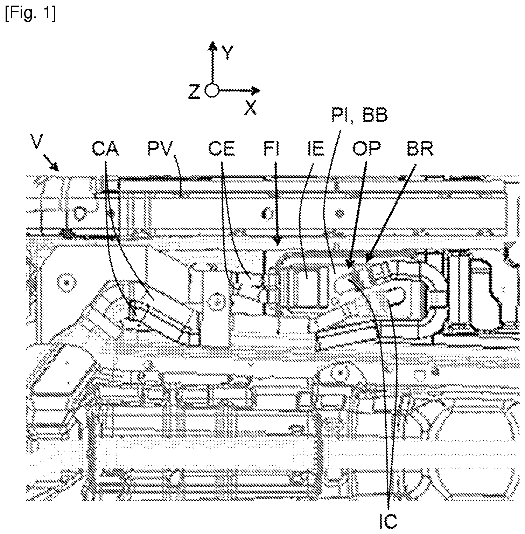

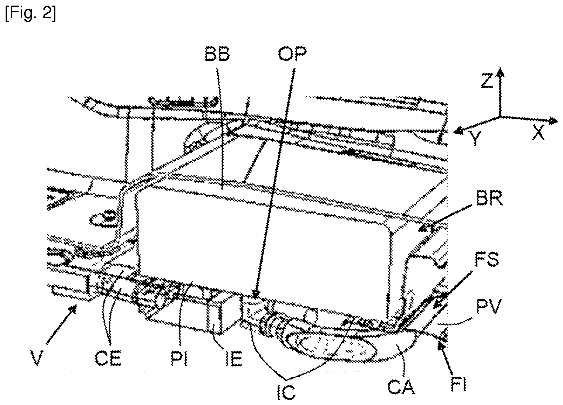

Sur les figures 1 et 2 la direction X est une direction dite longitudinale du véhicule V, laquelle est parallèle aux côtés latéraux de ce dernier, la direction Y est une direction dite transversale du véhicule V, laquelle est perpendiculaire à la direction X, et la direction Z est une direction dite verticale du véhicule V, laquelle est perpendiculaire aux directions longitudinale X et transversale Y.

On a schématiquement représenté sur les figures 1 et 2 une partie d'un plancher PL d'un véhicule V, équipée d'un exemple de réalisation d'une batterie rechargeable BR selon l'invention.

Comme illustré, une batterie (rechargeable) BR, selon l'invention, comprend au moins un dispositif de stockage d'énergie électrique (non apparent), un boîtier BB, un circuit de refroidissement interne (non apparent), une interface de connexion IC externe, et une interface électrique IE externe.

Par exemple, le (chaque) dispositif de stockage d'énergie électrique peut comprendre au moins une cellule électrochimique de stockage d'énergie électrique, par exemple de type lithium-ion (ou Li-ion) ou Ni-Mh ou Ni-Cd. Lorsqu'un dispositif de stockage d'énergie électrique comprend plusieurs cellules électrochimiques, ces dernières peuvent être couplées en série et/ou en parallèle. Lorsque la batterie BR comprend plusieurs dispositifs de stockage d'énergie électrique, ces derniers peuvent être couplés en série et/ou en parallèle.

De préférence, le (chaque) dispositif de stockage d'énergie électrique est placé contre le circuit de refroidissement (interne), qui comprend éventuellement un échangeur de chaleur à circulation de fluide de refroidissement.

Le boîtier BB comprend une paroi inférieure Pl qui est destinée à être couplée à la face supérieure FS d'un plancher PV d'un véhicule V, au-dessus d'une ouverture OP définie dans ce plancher PV. Cette face supérieure FS est orientée vers le haut (par exemple vers l'habitacle du véhicule V) et opposée à une face inférieure FI du plancher PV, qui est orientée vers la route. On notera que ce couplage peut éventuellement se faire via une plaque de renfort qui comprend alors une ouverture similaire à l'ouverture OP du plancher PV et destinée à être placée au-dessus de cette dernière (OP). Dans ce cas, la plaque de renfort est solidarisée fixement à la face supérieure FS du plancher PV, et la paroi inférieure PI du boîtier BB est solidarisée fixement à la plaque de renfort. Ces solidarisations fixes peuvent se faire par soudage ou vissage, par exemple.

L'interface de connexion IC est couplée au circuit de refroidissement (interne), solidarisée fixement à la paroi inférieure PI (sur une face externe), et destinée à traverser l'ouverture OP, définie dans le plancher PV sous la paroi inférieure Pl, afin d'être couplée à une partie des conduits d'alimentation CA qui passe sous le plancher PV.

On notera que c'est soit l'interface de connexion IC qui traverse la paroi inférieure PI afin d'être couplée en interne au circuit de refroidissement (interne), soit le circuit de refroidissement (interne) qui traverse la paroi inférieure Pl afin d'être couplé en externe à l'interface de connexion IC.

L'interface électrique IE est couplée au(x) dispositif(s) de stockage d'énergie électrique, solidarisée fixement à la paroi inférieure Pl (sur sa face externe), et destinée à traverser l'ouverture OP, afin d'être couplée à une partie des câbles électriques CE qui passe sous le plancher PV, et qui est notamment connectée à l'onduleur qui alimente le GMP du véhicule V.

On notera que c'est soit l'interface électrique IE qui traverse la paroi inférieure PI afin d'être couplée en interne au(x) dispositif(s) de stockage d'énergie électrique, soit des câbles électriques internes (couplés en interne au(x) dispositif(s) de stockage d'énergie électrique) qui traversent la paroi inférieure PI afin d'être couplés en externe à l'interface électrique IE.

Grâce à l'invention, lorsque l'on installe la batterie BR sur la face supérieure FS du plancher PL, on n'a plus à installer les interface de connexion IC et interface électrique IE, puisque ces dernières (IC et IE) sont déjà solidarisées à la paroi inférieure PI de son boîtier BB. Cela permet de préserver l'ergonomie du conducteur en dégradant peu ou pas l'habitabilité et/ou l'accessibilité. En outre, cela permet avantageusement de réduire le nombre de pièces devant être présentes sur les chaînes de montage des véhicules et la gestion des stocks.

Par exemple, l'interface électrique IE peut comprendre au moins deux connecteurs électriques traversant de façon étanche la paroi inférieure PI du boîtier BB et destinés à être couplés aux câbles électriques CE. Ces connecteurs électriques peuvent être de type femelle si les extrémités des câbles électriques CE associées sont de type mâle. Mais l'inverse est possible.

Egalement par exemple, l'interface de connexion IC peut comprendre deux connecteurs fluidiques qui sont solidarisés fixement à la paroi inférieure PI, traversent de façon étanche cette paroi inférieure PI, et sont destinés à être couplés aux conduits d'alimentation CA. Comme illustré non limitativement sur les figures 1 et 2, ces connecteurs fluidiques peuvent avoir une forme générale en L afin de permettre un raccordement des conduits d'alimentation CA sensiblement parallèlement à la face inférieure FI du plancher PV. Par ailleurs, ces connecteurs fluidiques peuvent être de type encliquetable.

On notera, bien que cela n'apparaisse pas sur les figures 1 et 2, que la batterie BR peut aussi comprendre une interface de dégazage solidarisée fixement à la paroi inférieure PI de son boîtier BB, communiquant avec l'intérieur de ce dernier (BB), et destinée à traverser l'ouverture OP afin d'évacuer vers l'extérieur du véhicule V du gaz et/ou du liquide, potentiellement toxique(s) et/ou inflammable(s), présent(s) à l'intérieur du boîtier BB en raison d'une fuite (résultant éventuellement d'un choc subi par le véhicule V ou d'une forte montée en température). Cela permet avantageusement d'éviter que ce gaz et/ou ce liquide pénètre(nt) dans l'habitacle ou dans le coffre du véhicule V où il(s) pourrai(en)t induire une intoxication de passager(s) et/ou la propagation d'un incendie. En outre, cela permet d'éviter d'avoir à installer l'interface de dégazage sur la chaîne de montage et donc de réduire le nombre d'interventions d'un technicien ou d'un robot et par conséquent la durée de fabrication du véhicule V et le coût de ce dernier. De plus, cela permet avantageusement de réduire le nombre de pièces devant être présentes sur les chaînes de montage des véhicules et la gestion des stocks.

On notera également, bien que cela n'apparaisse pas sur les figures 1 et 2, que le véhicule V peut comprendre un joint d'étanchéité intercalé entre la face supérieure FS de son plancher PV et la paroi inférieure PI du boîtier BB de sa batterie BR, autour de l'ouverture OP. Cela permet d'éviter que du liquide extérieur ou de la boue extérieure remonte sur la face supérieure FS après avoir traversé l'ouverture OP.

En variante, lorsque l'on intercale une plaque de renfort entre la face supérieure FS du plancher PV et la paroi inférieure PI du boîtier BB, le joint d'étanchéité peut être intercalé entre la paroi inférieure PI du boîtier BB et la plaque de renfort autour de l'ouverture de cette dernière. Cela permet d'éviter que du liquide extérieur ou de la boue extérieure remonte sur la face supérieure de la plaque de renfort après avoir traversé les ouvertures (dont OP).

Par exemple et non limitativement, la face supérieure de la plaque de renfort peut comprendre une rainure définie autour de son ouverture et logeant partiellement ce joint d'étanchéité.

On notera également, bien que cela n'apparaisse pas sur les figures 1 et 2, que le véhicule V peut comprendre une plaque de protection solidarisée fixement à la face inférieure FI de son plancher PV, au moins sous les interface de connexion IC et interface électrique IE et l'éventuelle interface de dégazage, afin de protéger ces dernières des agressions extérieures et en particulier des chocs avec des objets présents sur la route.

## Revendications

1. Batterie rechargeable (BR) pour un plancher (PV) d'un véhicule (V) comprenant un groupe motopropulseur, utilisant de l'énergie électrique transportée par des câbles électriques (CE), et des conduits d'alimentation (CA) dans lesquels circule un fluide de refroidissement, ladite batterie (BR) comprenant un boîtier (BB) comportant une paroi inférieure (PI) et logeant au moins un dispositif de stockage d'énergie électrique et un circuit de refroidissement destiné à être couplé auxdits conduits d'alimentation (CA), ladite paroi inférieure (PI) est destinée à être couplée à une face supérieure (FS) dudit plancher (PV) au-dessus d'une ouverture (OP) définie dans ce dernier (PV), et en ce qu'elle comprend i) une interface de connexion (IC) externe, couplée audit circuit de refroidissement, solidarisée fixement à ladite paroi inférieure (PI) et destinée à traverser ladite ouverture (OP) afin d'être couplée à une partie desdits conduits d'alimentation (CA) passant sous ledit plancher (PV), et ii) une interface électrique (IE) externe, couplée audit dispositif de stockage d'énergie électrique, solidarisée fixement à ladite paroi inférieure (PI), et destinée à traverser ladite ouverture (OP) afin d'être couplée à une partie desdits câbles électriques (CE) passant sous ledit plancher (PV).

2. Batterie selon la revendication 1, **caractérisé en ce que** ladite interface électrique (IE) comprend deux connecteurs électriques traversant de façon étanche ladite paroi inférieure (PI) et destinés à être couplés auxdits câbles électriques (CE).

3. Batterie selon la revendication 1 ou 2, **caractérisé en ce que** ladite interface de connexion (IC) comprend deux connecteurs fluidiques solidarisés fixement à ladite paroi inférieure (PI), traversant de façon étanche ladite paroi inférieure (PI), et destinés à être couplés auxdits conduits d'alimentation (CA).

4. Batterie selon l'une des revendications 1 à 3, **caractérisé en ce qu'**elle comprend une interface de dégazage solidarisée fixement à ladite paroi inférieure (PI), communiquant avec l'intérieur dudit boîtier (BB), et destinée à traverser ladite ouverture (OP) afin d'évacuer du gaz et/ou du liquide présent(s) à l'intérieur dudit boîtier (BB).

5. Véhicule (V) comprenant un groupe motopropulseur, utilisant de l'énergie électrique transportée par des câbles électriques (CE), un plancher (PV) et des conduits d'alimentation (CA) dans lesquels circule un fluide de refroidissement, **caractérisé en ce que** ledit plancher (PV) comprend une ouverture (OP), et **en ce qu'**il comprend en outre au moins une batterie rechargeable (BR) selon l'une des revendications précédentes, couplée à une face supérieure (FS) dudit plancher (PV) au-dessus de ladite ouverture (OP) et couplée auxdits câbles électriques (CE) et conduits d'alimentation (CA) via ladite ouverture (OP).

6. Véhicule selon la revendication 5, **caractérisé en ce qu'**il comprend une plaque de renfort comprenant une ouverture similaire à ladite ouverture (OP), solidarisée fixement à ladite face supérieure (FS) du plancher (PV) au-dessus de ladite ouverture (OP), et à laquelle est solidarisée fixement ladite paroi inférieure (PI) du boîtier (BB) de ladite batterie rechargeable (BR).

7. Véhicule selon la revendication 6, **caractérisé en ce qu'**il comprend un joint d'étanchéité intercalé entre ladite paroi inférieure (PI) du boîtier (BB) de ladite batterie rechargeable (BR) et ladite plaque de renfort autour de ladite ouverture de cette dernière.

8. Véhicule selon l'une des revendications 5 à 7, **caractérisé en ce qu'**il est de type automobile.

## Patentansprüche

1. Wiederaufladbare Batterie (BR) für einen Boden (PV) eines Fahrzeugs (V), die einen Antriebsstrang umfasst und elektrische Energie nutzt Die Batterie (BR) umfasst ein Gehäuse (BB), das eine untere Wand (PI) umfasst und mindestens ein Gerät zum Speichern elektrischer Energie beherbergt einen Kühlkreislauf, der an die Stromversorgungsleitungen (CA) angeschlossen werden soll, wobei die untere Wand (PI) an eine Oberseite (FS) des Bodens (PV) über einer darin definierten Öffnung (OP) angeschlossen werden soll Letzteres (PV) und dadurch, dass es i) eine externe Verbindungsschnittstelle (IC) umfasst, die mit dem Kühlkreislauf verbunden ist, fest an der unteren Wand (PI) befestigt ist und dazu bestimmt ist, durch die Öffnung (OP) hindurchzugehen, um angeschlossen zu werden an einen Teil der Stromversorgungsleitungen (CA), die unter dem Boden (PV) verlaufen, und ii) eine externe elektrische Schnittstelle (1E), die mit der elektrischen Energiespeichervorrichtung gekoppelt, fest an der unteren Wand (PI) befestigt und vorgesehen ist um durch die Öffnung (OP) zu verlaufen, um mit einem Teil der elektrischen Kabel (CE) verbunden zu werden, die unter dem Boden (PV) verlaufen.

2. Batterie nach Anspruch 1, **dadurch gekennzeichnet, dass** die elektrische Schnittstelle (1E) zwei elektrische Anschlüsse umfasst, die abgedichtet durch die Bodenwand (PI) verlaufen und dazu bestimmt sind, mit den elektrischen Kabeln (CE) verbunden zu werden.

3. Batterie nach Anspruch 1 oder 2, **dadurch gekennzeichnet** Die Verbindungsschnittstelle (10) umfasst zwei Fluidanschlüsse, die fest an der unteren Wand (PI) befestigt sind, abgedichtet durch die untere Wand (PI) verlaufen und dazu bestimmt sind, an die Versorgungsleitungen (CA) angeschlossen zu werden.

4. Batterie nach einem der Ansprüche 1 bis 3, **dadurch gekennzeichnet dass** es eine Entgasungsschnittstelle umfasst, die fest an der unteren Wand (PI) befestigt ist, mit dem Inneren des Gehäuses (BB) kommuniziert und dazu bestimmt ist, durch die Öffnung (OP) zu gelangen, um vorhandene(s) Gas und/oder Flüssigkeit(en) zu evakuieren. innerhalb des Gehäuses (BB).

5. Fahrzeug (V), bestehend aus einem Antriebsstrang, der elektrische Energie nutzt, die über elektrische Kabel (CE) transportiert wird, a Boden (PV) und Versorgungsleitungen (CA), in denen eine Kühlflüssigkeit zirkuliert, **dadurch gekennzeichnet, dass** der Boden (PV) eine Öffnung (OP) umfasst und dass er außerdem mindestens eine wiederaufladbare Batterie (BR) gemäß einem enthält der vorstehenden Ansprüche, gekoppelt mit einer Oberseite (FS) des Bodens (PV) über der Öffnung (OP) und gekoppelt mit den elektrischen Kabeln (CE) und Stromversorgungsleitungen (CA) über die Öffnung (OP).

6. Fahrzeug nach Anspruch 5, **dadurch gekennzeichnet, dass** es eine Verstärkungsplatte umfasst, die eine der Öffnung (OP) ähnliche Öffnung aufweist, die fest an der Oberseite (FS) des Bodens (PV) oberhalb der Öffnung (OP) befestigt ist die untere Wand (PI) des Gehäuses (BB) der wiederaufladbaren Batterie (BR) fest befestigt ist.

7. Fahrzeug nach Anspruch 6, **dadurch gekennzeichnet, dass** es eine Dichtung aufweist, die zwischen der unteren Wand (PI) des Gehäuses (BB) der wiederaufladbaren Batterie (BR) und der Verstärkungsplatte um die Öffnung der letzteren herum eingesetzt ist.

8. Fahrzeug nach einem der Ansprüche 5 bis 7, **dadurch gekennzeichnet, dass** es vom Pkw-Typ ist.

## Claims

1. Rechargeable battery (BR) for a floor (PV) of a vehicle (V) comprising a powertrain, using electrical energy transported by electrical cables (CE), and power conduits (CA) in which circulates a cooling fluid, said battery (BR) comprising a housing (BB) comprising a lower wall (PI) and housing at least one electrical energy storage device and a cooling circuit intended to be coupled to said supply conduits ( CA), said lower wall (PI) is intended to be coupled to an upper face (FS) of said floor (PV) above an opening (OP) defined in the latter (PV), and in that it comprises i) an external connection interface (IC), coupled to said cooling circuit, fixedly secured to said lower wall (PI) and intended to pass through said opening (OP) in order to be coupled to a part of said supply conduits ( CA) passing under said floor (PV), and ii) an external electrical interface (1E), coupled to said electrical energy storage device, fixedly secured to said lower wall (PI), and intended to pass through said opening (OP) in order to be coupled to a part of said electrical cables (CE) passing under said floor (PV).

2. Battery according to claim 1, **characterized in that** said electrical interface (1E) comprises two electrical connectors passing through said bottom wall (PI) in a sealed manner and intended to be coupled to said electrical cables (CE).

3. Battery according to claim 1 or 2, **characterized in that** said connection interface (10) comprises two fluid connectors fixedly secured to said lower wall (PI), passing through said lower wall (PI) in a sealed manner, and intended to be coupled to said supply conduits (CA).

4. Battery according to one of claims 1 to 3, **characterized in that** that it comprises a degassing interface fixedly secured to said lower wall (PI), communicating with the interior of said housing (BB), and intended to pass through said opening (OP) in order to evacuate gas and/or liquid present (s) inside said housing (BB).

5. Vehicle (V) comprising a powertrain, using electrical energy transported by electrical cables (CE), a floor (PV) and supply conduits (CA) in which a cooling fluid circulates, **characterized in that** said floor (PV) comprises an opening (OP), and **in that** it further comprises at least one battery rechargeable battery (BR) according to one of the preceding claims, coupled to an upper face (FS) of said floor (PV) above said opening (OP) and coupled to said electrical cables (CE) and power supply conduits (CA) via said opening (OP).

6. Vehicle according to claim 5, **characterized in that** it comprises a reinforcing plate comprising an opening similar to said opening (OP), fixedly secured to said upper face (FS) of the floor (PV) above said opening (OP ), and to which said lower wall (PI) of the housing (BB) of said rechargeable battery (BR) is fixedly secured.

7. Vehicle according to claim 6, **characterized in that** it comprises a seal inserted between said lower wall (PI) of the housing (BB) of said rechargeable battery (BR) and said reinforcing plate around said opening of the latter .

8. Vehicle according to one of claims 5 to 7, **characterized in that** it is of the automobile type.
